# EUROPEAN PATENT SPECIFICATION

(11) **EP 3 452 760 B1**
(45) Date of publication and mention of the grant of the patent: **04.03.2020**
(21) Application number: 17727411.5
(22) Date of filing: 03.05.2017
(51) Int. Cl.: F24F 3/147, F24F 12/00, F24F 13/18

(54) **RECUPERATOR FOR EXCHANGE OF ENERGY BETWEEN TWO AIR FLOWS**
REKUPERATOR ZUM AUSTAUSCH VON ENERGIE ZWISCHEN ZWEI LUFTSTRÖMEN
RÉCUPÉRATEUR DESTINÉ À ÉCHANGER DE L'ÉNERGIE ENTRE DEUX ÉCOULEMENTS D'AIR

(30) Priority: 03.05.2016 NL 2016731
(43) Date of publication of application: 13.03.2019
(73) Proprietor: Recair B.V., 5145NE Waalwijk (NL)
(72) Inventor: VAN KASTEREN, Marinus Henricus Johannes, 5145 NE Waalwijk (NL)
(74) Representative: Algemeen Octrooi- en Merkenbureau B.V.
(86) International application number: PCT/NL2017/050281
(87) International publication number: WO 2017/192038

(56) References cited:
- EP-A1- 2 275 751
- EP-A1- 2 351 970
- WO-A1-2007/051286
- US-A1- 2010 032 145
- US-A1- 2012 260 689
- US-A1- 2014 014 289

## Description

The invention relates to a recuperator for exchanging energy between a first air flow and a second air flow, comprising stacked plates such that first flow channels and second flow channels for the first air flow and the second air flow, respectively, are arranged between neighbouring plates.

Such a recuperator is described in international patent application WO 2015/152725 A1 with reference to figure 1 therein. US2010/032145 discloses a heat conduction unit formed by laminating a laminar having a flat shape and a spacer having a corrugated section of sinusoidal shape. The spacers are joined with the laminars interposed there between with their direction of corrugation orthogonal to each other alternately so as to form at least one exhaust layer communicating with the exhaust passage and at least one intake layer communicating with the intake passage. The laminar of the heat conduction unit includes a high polymer resin layer having high moisture permeability and air shield ability and a pair of fibre synthetic fabric layers laminated on opposite surfaces of the high polymer resin layer. The exhaust and intake airflows are exchanging energy via the laminar while passing the respective separate exhaust and intake layers. The invention has for its object to provide a recuperator with a favourable compromise between ease of manufacture and product characteristics such as efficiency. To achieve this, plates of a first type and plates of a second type are provided in the stack of the recuperator according to the invention, wherein the plates of the first type and the plates of the second type differ from one another as regards their weight and/or as regards the material from which they are manufactured. The invention is based on the inventive recognition that it is not necessary to manufacture the plates within the stack from the same material, as in the prior art, or to give all plates the same weight, but that it can indeed be advantageous to manufacture the plates of a recuperator from different materials or to give them different weights. The advantages thereof may lie, for example, in said aspects of ease of manufacture of the plates, and thus of the entire recuperator, and product characteristics of the recuperator, which will be explained in more detail further below. The advantages are particularly evident if the plates are of different shapes, at least in the area where they form the flow channels, but they may also be obtained in the case of plates of uniform shapes.

It may be advantageous, at any rate in view of the ease of manufacture of the recuperator, if the plates of the first type and the plates of the second type are provided in alternation in the stack.

According to the invention, the material of the plates of one of the first and second types is permeable to moisture whereas the material of the plates of the other one of the first and second types is impermeable to moisture. The material of the plates of the one type that is permeable to moisture ensures that the recuperator can be regarded as a latent recuperator. A latent recuperator is understood to be a recuperator that is designed for transferring both heat and moisture. The force effecting the transfer of moisture in the latent recuperator is a difference in water vapour pressure between the two air flows, so that moisture will be transferred by the air flow having the higher vapour pressure, i.e. the air flow having the higher absolute air humidity in practice, to the air flow having the lower vapour pressure, i.e. the air flow having the lower absolute air humidity in practice. The fact that the plates of the other type are of a material impermeable to moisture means that the recuperator can also be regarded as a hybrid recuperator. The required capacity of a recuperator to exchange moisture between air flows is to be taken into account in the design of a latent recuperator. The invention renders it possible to opt for a realization of this capacity by means of plates of a material that is permeable to moisture, which plates can be manufactured comparatively simply and thus inexpensively. As a general rule, plates made of a material that is permeable to moisture are difficult to deform, or are not deformable at all, and they are economically available in planar form only. The required capacity mentioned above can accordingly be realized by means of planar plates. The heat exchanging capacity of the recuperator according to the present embodiment of the invention may then be increased in that the planar sheets of material permeable to moisture are combined in the stack with profiled sheets of material that is impermeable to moisture. It is also possible to give all sheets, whether permeable or impermeable to moisture, a planar shape for reasons of economy. The plates may then be kept at a distance to one another by spacer elements, for example in the form of short lengths of a strip material or blocks of material, such that parallel flow channels are created between neighbouring planar plates. The flow channels may then be layer-shaped.

The material permeable to moisture may comprise paper and/or a membrane or an open-cell synthetic resin material.

It may furthermore be advantageous if the plates manufactured from a material that is permeable to moisture have a plate thickness that lies between 0.05 and 0.5 mm.

According to the invention the plates of one of the first and second types are planar and the plates of the other one of the first and second types have an undulating profile at least in the area of the first flow channels and the second flow channels.

For reasons of manufacturing technology it may be advantageous if the plates having an undulating profile are created through a deformation of planar plates.

To save material and thus expense, it is possible herein that the thickness of the originally planar plates to be deformed into profiled plates differs from the thickness of the planar plates in the recuperator. More specifically, it will usually be favourable if the thickness of the originally planar plates to be deformed into profiled plates is chosen to be greater than the thickness of the planar plates in the recuperator. The deformation of the planar plates into profiled plates will result in a stretching of their material, whereby the thickness of the profiled plates becomes smaller than the thickness of the initial planar plates, for example equal to the thickness of the planar plates in the recuperator. Given the situation in which the planar plates and the profiled plates are manufactured from the same material, the weight of the profiled plates will thus differ from that of the planar plates in the present embodiment.

An efficient exchange of energy can furthermore be obtained in that the distance between two neighbouring planar plates lies between 1 mm and 20 mm, more preferably between 2 mm and 20 mm.

The capacity of the recuperator benefits from alternating, mutually adjoining first flow channels and second flow channels formed within sets of two neighbouring planar plates with an undulating profiled plate in-between. The crests of the undulating profiled plates may then bear on the planar plates, thus forming elongate parallel first and second flow channels.

It is generally favourable if the size of the exchanging surface area of the plates of one of the first and second types differs from the size of the exchanging surface area of the plates of the other one of the first and second types. This offers a high degree of freedom for shaping the cross-sectional dimensions of the first flow channels and the second flow channels so as to optimize the energy transfer.

In a possible embodiment, the flame retarding properties of the material of the plates of one of the first and second types differ from the flame retarding properties of the material of the plates of the other one of the first and second types. The requirements imposed on the flame retarding properties of the recuperator may thus be met, for example, in that only the material of the plates of one of the two types of plates is given increased flame retarding properties, for example in that flame retarding additives are applied to the material of the plates of said one type. The addition of increased flame retarding properties to the material of only a proportion of the plates of the recuperator can lead to a cost saving. If the material having the increased flame retarding properties is more difficult to deform, it may be opted for to give the plates made from the material having the increased flame retarding properties a planar shape and to construct the other plates in a profiled shape as described above.

In a further possible embodiment, the hydrophilic or hydrophobic properties of the material of the plates of one of the first and second types differ from the hydrophilic or hydrophobic properties of the material of the plates of the other one of the first and second types. To promote the exchange of moisture, more specifically water vapour, it is favourable if the plate through which the exchange takes place is hydrophilic. The hydrophilic or hydrophobic properties of the material may furthermore influence the formation of condensation in flow channels, which may lead to choking up of flow channels.

In a further possible embodiment, the hygienic properties of the material of the plates of one of the first and second types differ from the hygienic properties of the material of the plates of the other one of the first and second types. This may be favourable for reasons similar to those set out above in relation to the possibility of giving the plates different flame retarding properties, the assumption being that certain requirements may be imposed on the hygienic properties of a recuperator.

It may be advantageous, furthermore, if the plates of one of the first and second types are provided with a coating on at least one side, whereas the plates of the other one of the first and second types are not provided with a coating or are provided with a different coating. A coating may have a positive influence, for example, on the ease with which a planar plate can be deformed into a profiled plate.

A latent recuperator as described above, in which the material of the plates of one of the first and second types is permeable to moisture and the material of the plates of the other one of the first and second types is impermeable to moisture can be advantageously used in a ventilation device for the exchange of energy between a first air flow entering a building from the outer air and a second air flow issuing from said building to the outer air, which ventilation device comprises a housing with an internal communication channel for the two air flows and at least one recuperator of a first type which is arranged in said communication channel, which recuperator of the first type comprises first further flow channels for the first air flow and second further flow channels for the second air flow, wherein neighbouring first further flow channels and second further flow channels are at least partly separated from one another by a wall which is impermeable to moisture, the latent recuperator also being arranged in the communication channel in series with the recuperator of the first type. Ventilation devices are used for discharging gases generated in a building, such as carbon dioxide and volatile organic substances, from that building to the outer air.

The series arrangement of the recuperators in the ventilation device according to the invention implies that during operation one of the two air flows will pass first through the recuperator of the first type and then through the latent recuperator, whereas the other one of the two air flows will pass first through the latent recuperator and then through the recuperator of the first type. The risk of condensation and ice formation is present in particular when comparatively warm and moist air is cooled in a first air flow, whereas the second air flow contains comparatively cool and dry air. The use according to the invention of at least one recuperator of the first type and at least one latent recuperator arranged in series offers the advantage that first moisture, and accordingly also heat, is removed from the comparatively warm and moist air in the latent recuperator. Since the moisture is absorbed by the other air flow and this other air flow is supplied to the space from which the comparatively warm and moist air flows into the device, the humidity of the air in this space can be kept at a certain level. After the humidity of the initially comparatively warm and moist air has been reduced to a certain level in the latent recuperator, the risk can be eliminated, or at least limited, that any (further) cooling down of this air in the recuperator of the first type will lead to condensation, let alone to ice formation. The Mollier diagram familiar to those skilled in the art may be used as a guide herein for determining to what level the humidity of the comparatively warm and moist air is to be reduced so that the risk of condensation can be excluded, or at least substantially reduced, for a given comparatively low temperature of the incoming other air flow.

The advantages of the ventilation device were elucidated above with reference to an example in which a comparatively warm and moist air flow and a comparatively cold and dry counterflow are present, wherein the latent recuperator is located at the side of the comparatively warm and moist air flow and the recuperator of the first type at the side of the comparatively cold and dry air flow, which arrangement will be preferred in many applications, but the latent recuperator and the recuperator of the first type may also be arranged the other way round within the scope of the invention. In that case the comparatively warm and moist air flow will first cool down in the recuperator of the first type, but not to an extent such that it enters the region where the air is fully saturated. A further cooling down of the air will then take place in the latent recuperator, but at the same time moisture is removed from the air so that a full saturation of the air will not occur in spite of the falling temperature. It will generally be preferred in practice to locate the latent recuperator at the comparatively warm and moist side of the device so that moisture will immediately be removed from this warm air flow and the risk of condensation is reduced.

The advantages of the ventilation device as described above can be obtained not only if a hybrid latent recuperator is included in the series arrangement, but also if a non-hybrid latent recuperator is included in the series arrangement.

Depending on the application, it may be preferable for the at least one recuperator of the first type to be a sensible recuperator. A sensible recuperator is understood to be a recuperator that is designed for exchanging energy exclusively in the form of heat between the two air flows, this in contrast to a latent recuperator. The driving force behind the transfer of heat in the sensible recuperator is a difference in temperature between the two air flows such that heat will be transferred by the air flow of higher temperature to the air flow of lower temperature, the degree to which heat is transferred being proportional to the temperature difference.

For reasons comparable to those set out above in relation to the recuperator according to the invention, it may be advantageous if the recuperator of the first type comprises stacked plates, the first further flow channels and the second further flow channels being formed between neighbouring plates, while possibly plates are provided in the stack which, at least in the region of the first further flow channels and the second further flow channels, alternate between an undulating profile and a planar shape, and wherein possibly the distance between two neighbouring planar plates lies between 1 mm and 20 mm, more preferably between 2 mm and 20 mm.

It may be advantageous for the purpose of removing any undesirable condensation in the flow channels in a comparatively simple manner, if the first flow channels and the second flow channels as well as the first further flow channels and the second further flow channels extend in a horizontal plane.

It may be preferable, especially if the surroundings where the device is used are comparatively humid, that the at least one recuperator of the first type is a hybrid recuperator wherein only a proportion of the plates of the recuperator of the first type is manufactured from a material that is impermeable to moisture.

The material that is impermeable to moisture may be a synthetic resin material, such as polystyrene, in an embodiment.

The plates manufactured from a material that is impermeable to moisture may have a plate thickness of between 0.1 mm and 0.5 mm.

In a possible embodiment, the ventilation device comprises at least one fan for causing an associated one of the two air flows to pass through the communication channel. The inclusion of the at least one fan in the device can simplify an instalment of the system of which the device is to form part in that no separate mounting of the fan with its associated equipment is necessary.

The efficiency of the ventilation device can be enhanced in particular if the device comprises a fan for each of the two air flows.

It may be advantageous, especially if the fans are provided in the communication channel in an embodiment yet to be described in detail further below, that the two fans associated with the two air flows are provided in the same longitudinal position viewed in the longitudinal direction of the communication channel. In practice the two fans will thus be located comparatively close to one another and directly opposite one another, so that the longitudinal portion of the communication channel occupied by the fans can be limited and the length of the communication channel can be more usefully employed for accommodating the serial arrangement of the recuperators. In addition, arrangements for the energy supply of the fans, such as supply cables, can be more efficiently utilized and the ventilation device can be constructed in a comparatively simple manner.

In a further embodiment, the at least one fan is provided in the communication channel. This offers the advantages that obtrusive noise potentially caused by the at least one fan can be reduced, in particular if the at least one fan is located between two recuperators arranged is series, such as between a sensible recuperator and a latent recuperator, and that the fan on account of its position between two recuperators is screened off from the surroundings of the device according to the invention, i.e. for example from the outer air in this case, which reduces the risk of failure of the at least one fan.

It may furthermore be advantageous if the ventilation device comprises at least two fans arranged in series, each for causing an associated one of the two air flows to pass through the communication channel. The use of at least two fans arranged in series instead of a single, larger fan achieves that the diameter of the communication channel need not be adapted or enlarged, or at any rate to a lesser extent, for accommodating a fan therein.

Said at least two fans arranged in series can be efficiently utilized herein if the at least two fans arranged in series are positioned between two different pairs of consecutive recuperators, and in particular if the device is provided with respective fans between all pairs of consecutive recuperators belonging to an air flow.

It may be highly advantageous for the purpose of adapting to the temperature and humidity of the two air flows if the ventilation device is provided with at least one valve that is switchable between a first position and a second position, such that in the first position an air flow is passed at least substantially through a recuperator associated with this first position and in the second position the air flow is directed by the valve so as to flow at least substantially past said associated recuperator.

From a constructional point of view it may be advantageous especially if the recuperator of the first type and/or the latent recuperator comprises stacked plates, while a valve is provided above or below the stack of a recuperator for guiding an air flow above or below the respective recuperator past this recuperator in the second position of the valve.

The ventilation device can be even better attuned to the temperature and humidity of the air flows if it is provided with a number of valves for guiding an air flow past a number of recuperators when said valves are in their second position, and in particular if the ventilation device is provided with a valve for each recuperator.

Generally speaking, the ventilation device according to the invention can be efficiently used if the recuperators are of the counterflow type. It is by no means excluded, however, that the invention can also be used with recuperators of the cross-flow or parallel-flow types.

It is usually advantageous in practice if the communication channel has a flow surface area of between 50 cm² and 500 cm², more preferably between 100 cm² and 300 cm².

The ventilation device may be advantageously used in a window frame. The invention accordingly also relates to a window frame provided with a ventilation device according to the invention, whether or not in optional embodiments as described above.

The longitudinal direction of the communication channel extends advantageously parallel to the plane of the window frame, whereby a considerable length becomes available for the communication channel.

In a possible embodiment, the longitudinal direction of the communication channel extends in a horizontal direction, while the housing preferably adjoins a lintel of the window frame, and more preferably is mounted to this lintel.

Alternatively, the longitudinal direction of the communication channel may extend in a vertical direction. The housing in that case preferably adjoins a post of the window frame, and more preferably is mounted to this post.

For a good combination with the shapes of posts and lintels of the window frame, it may be advantageous if the housing has a rectangular cross-section in a plane perpendicular to the longitudinal direction of the communication channel. The recuperators and any other components, such as fans and valves, can as a rule be accommodated in such a housing in a constructionally simple manner.

The invention further relates to a building provided with a window frame according to the invention as discussed above. A "building" is understood to be a structure that has at least one room for human occupation of any kind. Examples of buildings are a residential house, a business place such as an office, or a factory, etc.

The invention in general relates also to a building provided with a ventilation device according to the invention as discussed above wherein the housing is provided in a passage in an outer wall of the building for exchanging energy between an air flow that flows into the building via the device and an air flow that flows out of the building via the device. The passage may be shared with the passage in which a window frame is mounted, but the passage may alternatively be provided exclusively for the ventilation device.

It may be highly advantageous, in particular for use in existing buildings, if the housing has a round cross-section in a plane perpendicular to the longitudinal direction of the communication channel, because in that case the passage in the wall can be simply made by means of drilling. In new constructions, however, it is quite practicable to use rectangular passages, for example letterbox-type passages, in which a ventilation device can be provided comparable to a ventilation device that could be integrated into a window frame. The passage may be provided in the outer wall at some distance from posts or lintels of a window frame parallel to said posts or lintels.

The risk of condensation arising in one of the recuperators of the ventilation device in a situation in which it is envisaged to keep the heat inside the building can be reduced in particular if the recuperator located at the end of the communication channel that faces the building's interior is a latent recuperator, whereby the humidity percentage of the air flowing out of the building is immediately lowered.

The risk of condensation arising in one of the recuperators of the ventilation device in a situation in which it is envisaged to keep the heat out of the building, as in a hot climate, can be reduced in particular if the recuperator located at the end of the communication channel that faces the building's exterior is a latent recuperator.

The invention will now be explained in more detail below with reference to a few embodiments of the invention and the accompanying figures.
Figure 1 is a perspective view of a ventilation device according to the invention;
figure 2 shows a building in which the invention is applied;
figures 3a and 3b show the ventilation device of figure 1 in horizontal longitudinal section and in front elevation, respectively;
figure 4 is a horizontal longitudinal section similar to figure 3a of an alternative embodiment of a ventilation device according to the invention;
figure 5 shows a portion of the layers of a recuperator according to the invention as may be used in a ventilation device according to the invention;
figure 6 shows a portion of the layers of a latent recuperator in an alternative embodiment;
figure 7 shows part of a window frame fitted with a ventilation device according to the invention;
figure 8 is a diagrammatic perspective view of the ventilation device of figure 7 in a first operational position;
figure 9 is a perspective view of this ventilation device in a second operational position;
figure 10 is a perspective view of this ventilation device in a third operational position;
figure 11 shows the ventilation device of the figures 7, 8, and 9 in plan view; and
figure 12 shows a further alternative embodiment of a ventilation device according to the figures 8 to 11 in plan view.

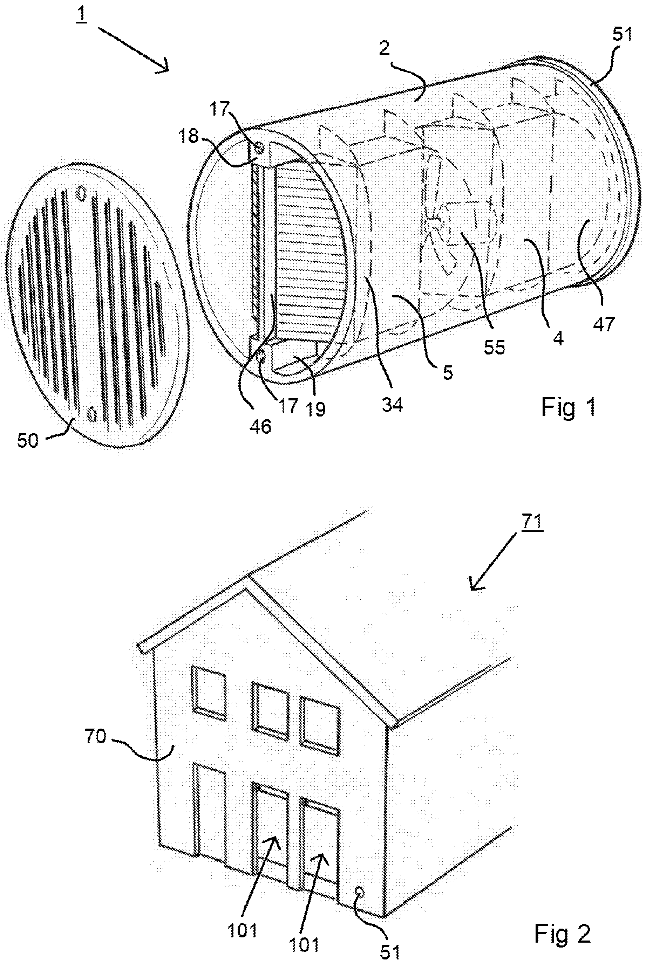

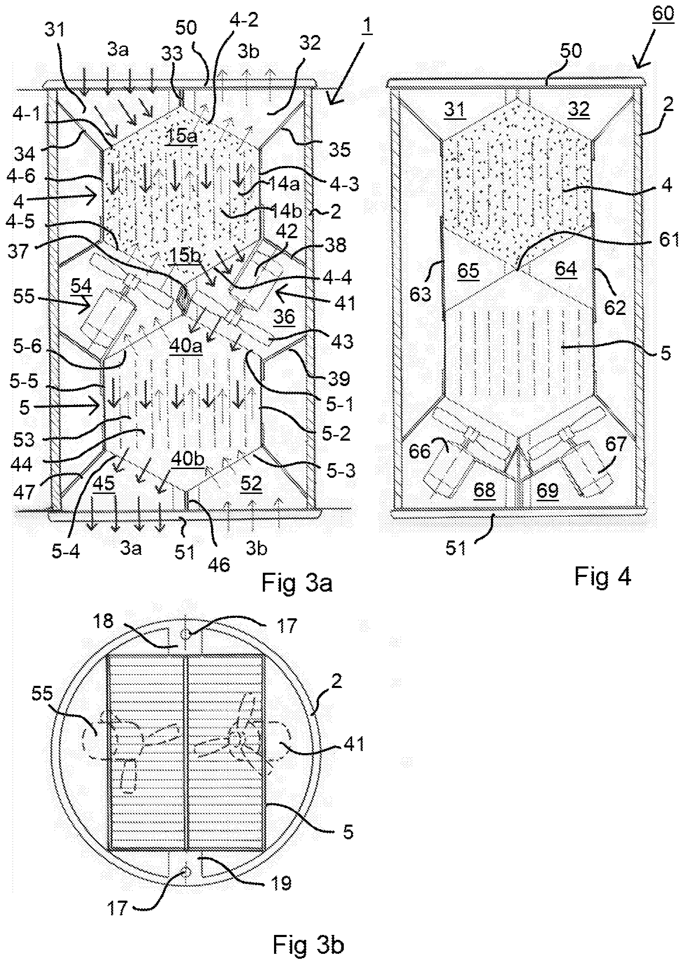

The figures 1, 3a, and 3b show a ventilation device 1 according to the invention. The device 1 comprises a tubular housing 2 with an at least substantially circular cross-section and open ends which are closed off by grids 50, 51. The interior of the housing 2 forms an at least substantially circular communication channel for two air flows 3a, 3b (see figure 3a) which flow through the channel in opposite directions during operation. Two recuperators 4, 5 are provided in a series arrangement in the communication channel. The recuperator 4 is of the latent type and the recuperator 5 is of the sensible type. Sensible recuperators are generally designed to exchange heat, not moisture, between the two air flows 3a, 3b, such that the air flow with the highest temperature will cool down and the air flow with the lowest temperature will heat up. Latent recuperators are designed, unlike sensible recuperators, to be able to exchange (also) moisture between the two air flows 3a, 3b. Heat will inevitably be transferred as well in practice during this, provided that there is a temperature difference.

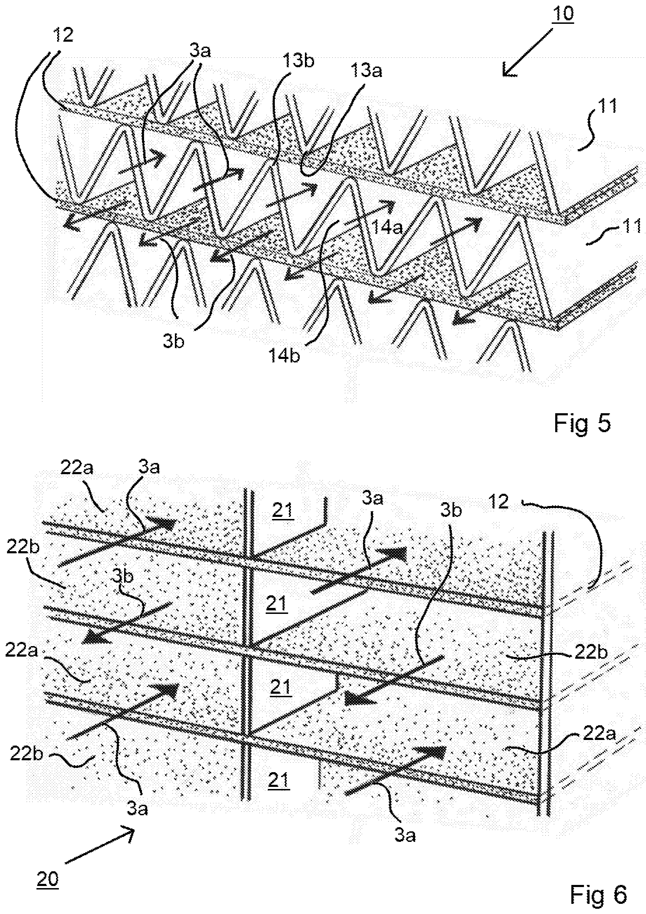

Figure 5 diagrammatically shows part of a possible embodiment of a latent hybrid recuperator 10. The latent recuperator 10 comprises a stack of plates 11 having an undulating profile and planar plates 12 arranged in alternation. In the example of figure 5, the profiled plates 11 are manufactured from a foil-type material that is impermeable to moisture, for example polystyrene or polyethylene terephthalate. The planar plates 12 are manufactured from a foil-type material that is permeable to moisture, for example a membrane of a synthetic resin such as polyethylene or polystyrene with an open cell structure. The thickness of the plates 12 is, for example, 0.2 mm. The wave form of the undulating plates in this example is a triangular shape. The profiled plates are stacked in this example such that the lower tips 13a of the triangular shapes are located between two neighbouring upper tips 13b of the respective next lower profiled plates 11.

Elongate, mutually parallel flow channels 14a, 14b are formed between the planar plates 12 and the adjoining profiled plates 11. Said flow channels 14a are shaped as isosceles triangles in cross-section with the apex pointing downward while the flow channels 14b are shaped as isosceles triangles in cross-section with the apex pointing upward. The air flows 3a and 3b are separated from one another in collection areas 15a, 15b of the recuperator 4 such that the air flow 3a will pass exclusively through the flow channels 14a and the air flow 3b exclusively through the flow channels 14b. The associated air flows 3a, 3b will exchange heat (and no moisture) via the profiled plate 11 wherever the flow channels 14a, 14b adjoin each other. This is the case where neighbouring flow channels 14a, 14b are located between two neighbouring planar plates 12.

An exchange of energy will also take place via the planar plates 12 to the extent that flow channels 14a, 14b adjoin each other via such a planar plate 12. Moisture will be transferred via the planar plate 12 by the air flow 3a, 3b in a flow channel 14a, 14b of higher vapour pressure to an air flow 3b, 3a in a flow channel 14b, 14a of lower vapour pressure. Heat will also be transferred via this planar plate 12.

Since heat is transferred between the air flows 3a, 3b in the latent recuperator 10 both through the profiled, non-permeable plates 11 and through the planar, permeable plates 12, while moisture is additionally transferred through the planar, permeable plates 12 only, the latent recuperator may be regarded as a hybrid recuperator. It is also conceivable in an alternative embodiment that the profiled plates 11 are made from a permeable material. The recuperator would then still be a latent recuperator, but not a hybrid recuperator.

Figure 6 shows a further possible embodiment of a latent recuperator 20. It comprises, as does the latent recuperator 10, planar plates 12 permeable to moisture which are stacked with interposed spacers 21. The spacers 21 are constructed herein as short, strip-shaped elements, but they may alternatively be block-shaped elements. The spacers 21 may, for example, be secured to the planar plates 12 by means of gluing. Flow strata 22a, 22b are thus formed between the planar plates 12 through which the air flows 3a and 3b are conducted in mutually opposed directions. The exchange of heat and moisture takes place via the planar plates 12 which separate two neighbouring flow strata 22a, 22b from one another each time.

The recuperators described above with reference to the figures 5 and 6 merely represent examples of recuperators such as may be constructed as embodiments of the invention. The state of the art provides further examples of possible embodiments of recuperators such as, for example, that described in Dutch Patent NL 2 011 454, in which the stack consists of profiled plates only.

Figure 3a shows the interior, i.e. the communication channel of the housing 2 in more detail. The housing 2 is provided at its upper and lower sides with two inwardly directed ribs 18, 19 which are directed towards one another and in which internal screw threads 17 are provided for fastening the grids 50, 51. The recuperators 4, 5 are accommodated between the ribs 18, 19 and have a hexagonal shape in plan view, defined by the hexagon sides 4-1 to 4-6 and 5-1 to 5-6. An inlet 31 for the air flow 3a and an outlet 32 for the air flow 3b are provided in the communication channel at the side where the air flow 3a enters the communication channel. The inlet 31 and the outlet 32 are separated by a central partition wall 33. The inlet 31 is further delimited by a wall 34, and the outlet 32 is delimited by a wall 35. The inlet 31 connects to the hexagon sides 4-1 of the latent heat exchanger 4 such that the complete air flow 3a entering the ventilation device 1 via the inlet 31 will flow through the latent heat exchanger 4. The relevant air will spread in the area 15a over the ends of the flow channels 14a located in the area 15a. At the opposite ends the air of air flow 3a will flow from the flow channels 14a and be deflected in area 15b to the hexagon side 4-4 straight opposite the hexagon side 4-1. There the air flow 3a enters an intermediate zone 36 bounded by a central partition body 37, walls 38, 39, the hexagon side 4-4 of the latent recuperator 4, and the hexagon side 5-1 of the recuperator 5, where the air flow 3a enters the sensible recuperator 5 again, more specifically the area 40a thereof.

A fan 41 is positioned in the intermediate zone 36, with an electric motor 42 and a rotor with blades 43. When the electric motor 42 is energized, the air flow 3a will be sucked on via the latent recuperator 4 and then blown from the ventilation device 1 via the sensible recuperator 5. In the area 40a of the recuperator 5 the air flow 3a will spread over the flow channels 44 of the recuperator 5. At the ends of these flow channels 44 the air flow 3a flows into a collection area 40b, then along the hexagon side 5-4 into an outlet 45 that adjoins said hexagon side 5-4, and further through a central partition 46 and a wall 47. The air flow 3a finally leaves the ventilation device 1 through the grid 51.

In a similar manner, the air flow 3b passes through, in that order, grid 51, inlet 52, area 40b, flow channels 53, area 40a, intermediate zone 54, area 15b, flow channels 14b, area 15a, outlet 32, and grid 50 in the opposite direction through the communication channel of the ventilation device 1. The movement of the air flow 3b is generated by a fan 55 arranged in the intermediate zone 54 straight opposite the fan 41. Viewed in a longitudinal direction of the communication channel formed by the housing 2, the fans 41 and 42 are located at least substantially straight opposite one another in the same longitudinal position.

Figure 4 shows an alternative embodiment 60 of the ventilation device 1 of figures 1, 3a and 3b, wherein the latent recuperator 4 and the sensible recuperator 5 are again arranged in series within the housing 2, but closer together, i.e. so close together that tips of the respective hexagonal shapes of the latent recuperator 4 and the sensible recuperator 5 are in contact with one another at locations 61. Because of this, and because the walls 62, 63 interconnect the closed hexagon walls 4-3 and 5-2, and the closed hexagon walls 4-6 and 5-5, the intermediate zones 64, 65 are smaller than the intermediate zones 36 and 54. The ventilation device 60 also further comprises two fans 66, 67 which are positioned in the outlet 68 and the inlet 69, respectively, which are larger than the respective corresponding outlet 45 and inlet 52.

The ventilation devices 1, 60 may be used, for example, in an outer wall 70 of a building 71 (see figure 2). A through passage in the form of a cylindrical bore will then be provided in this outer wall 70. The grid 50 will extend at the inner side of the wall 70 and the grid 51 at the outer side of the wall 70. The air flow 3a contains the air coming from the building 71, issuing from the building 71 through the device 1, 60 to the outer air, while the air flow 3b contains the air entering the building 71 via the device 1, 60. The air flow 3b is not only heated during its passage, but it will also become more humid in the latent recuperator 4, so that the atmospheric humidity in the building 71 can be kept at a desired level.

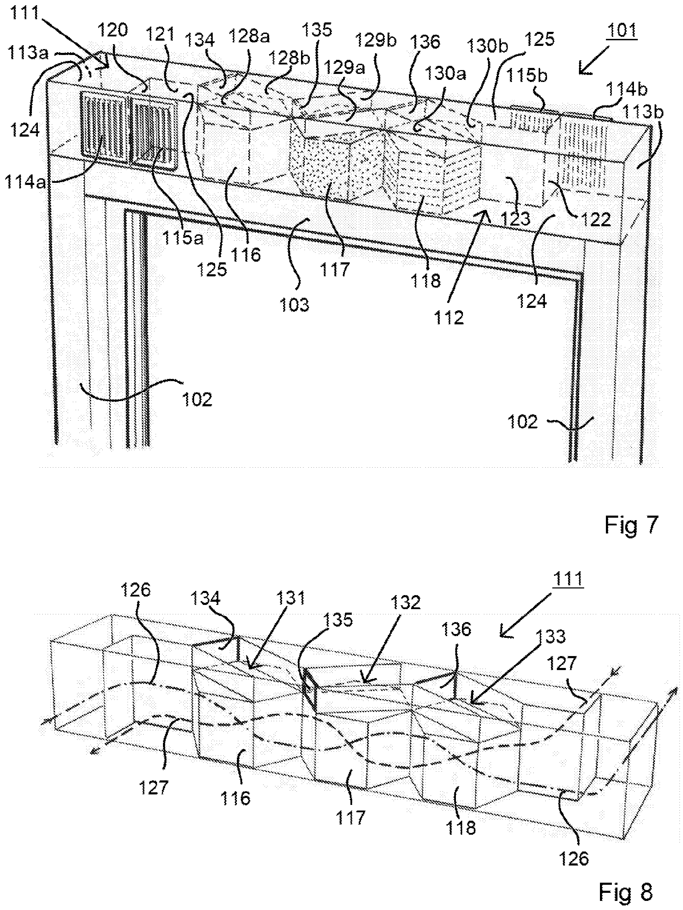

An alternative application of a ventilation device according to the invention is shown in figure 2, which depicts a building with a window frame 101, which window frame 101 is mounted in the outer wall 70. The window frame 101, whose upper portion is shown in figure 7, comprises two vertical posts 102, an upper lintel 103, and a window sill not shown in figure 7. The window frame 101 is provided with a ventilation device 111.

The ventilation device 111 comprises a tubular housing 112 of rectangular cross-section. The mutually opposed ends 113a, 113b of the housing are closed. Openings are provided in mutually opposed vertical sides of the housing 112 near the respective ends 113a, 113b, which openings are closed off by grids 114a, 115a, 114b, 115b. The interior of the housing 112 constitutes a communication channel for two air flows.

Three recuperators 116, 117, 118 of different types are arranged in series in the communication channel. Within the scope of the invention, at least one of the recuperators 116, 117, 118 is of the latent type and at least one of the recuperators 116, 117, 118 is of the sensible type. The recuperators 116, 117, 118 may be of the same types as the recuperators discussed with reference the figures 5 and 6 above.

Mutually facing tips of the hexagon extremities of neighbouring recuperators are substantially in contact with one another. Starting from a position between the grids/openings 114a, 115a and the tip of the hexagon of the recuperator 116 facing said openings 114a, 115a, the ventilation device 111 is provided with walls 120, 121 within the housing 112, which walls extend over the full height of the housing 112. Similarly, walls 122, 123 are provided at the opposite side. Said walls 120 - 123 together with the recuperators 116, 117, 118 define two air flow channels 124, 125 lying side by side and having mutually opposed flow directions. Figure 8 shows how two air flows 126 and 127 flow through these counterflow channels 124, 125 during normal operation.

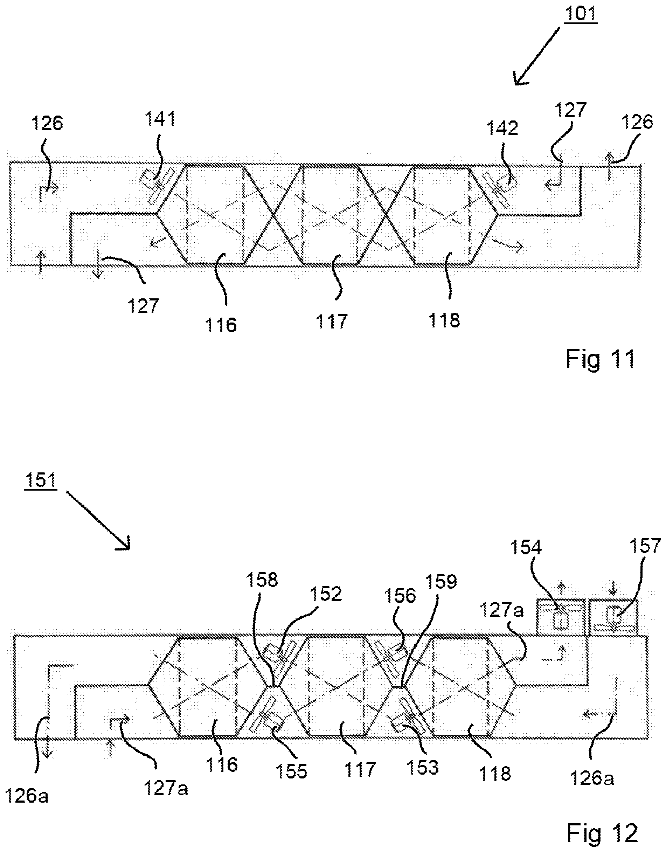

The air flows 126, 127 are generated by fans not shown in figures 7 to 10. Figure 11 does show such fans 141, 142 schematically. Since the fans 141, 142 are provided in the housing 112, while in addition the fan 141 is mounted in the air flow that leaves the building and the fan 142 is provided at the side of the recuperators 116, 117, 118 facing away from the building 71, any obtrusive noise caused by the fans 141, 142 will be limited.

The height of the recuperators 116, 117, 118 is smaller than the height of the housing 112, for example 75% of the latter height. Parallel walls 128a, 128b, 129a, 129b, and 130a, 130b are provided above the recuperators for defining respective bypass channels 131, 132 and 133 (figure 8) therebetween for the air flow 126. Valve bodies 134, 135, and 136 for the respective recuperators 116, 117, 118 are provided at the frontmost side of the parallel walls 128a, 128b, 129a, 129b, and 130a, 130b, as viewed in the flow direction of 126. The valves 134, 135, 136 can be individually operated by means not shown in any detail between an upward blocking position (figure 8) and a downward open position. In the open position a space is set free for the air flow 126 to bypass the recuperator 116, 117, 118 associated with the relevant valve 134, 135, 136, which will indeed happen in practice because of the comparatively high flow resistance offered by the recuperators 116, 117, 118 to the air flow 126. The valves 134, 135, 136 may be operated, for example, by small electric motors that receive wireless operational commands from a central control system on the basis of measured temperature and humidity values both inside and outside the building 71. It suffices to provide bypass valves for one of the air flows 126, 127 only because the absence of one of the air flows 126, 127 in a recuperator 116, 117, 118 in itself ensures that no or at least comparatively little energy is exchanged in the relevant recuperator 116, 117, 118. It is alternatively possible, however, to provide a valve or a number of valves for each of the air flows 126, 127, so that each of the air flows 126, 127 can bypass one or several recuperators. The flow resistance can be reduced thereby and less power is required of the fans.

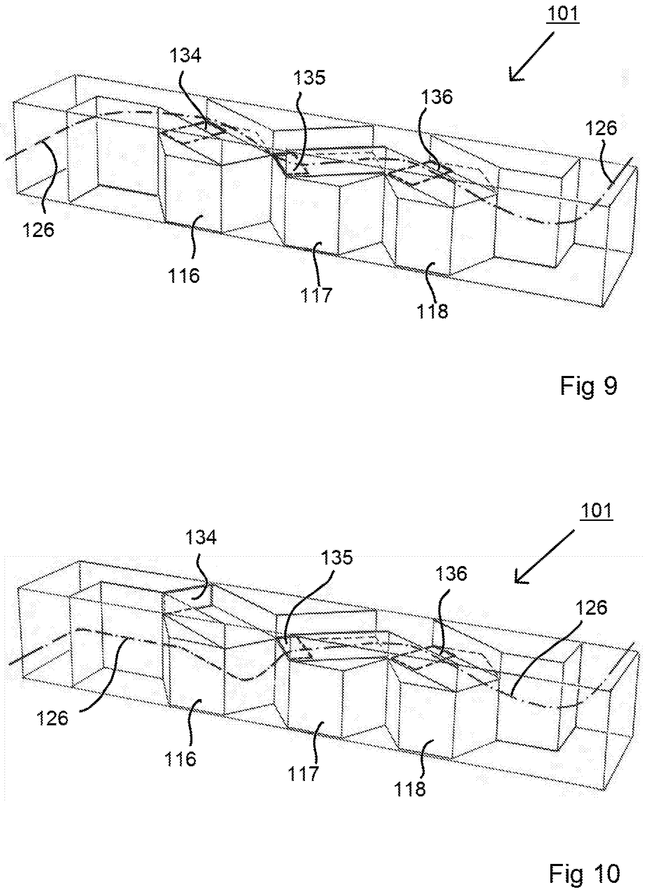

A suitable application of the valves may be found, for example, in the situation of a cool summer night when it is indoors warmer than outside. In such a situation one wants to get the cool outside air inside without adding heat thereto, for which purpose one or several of the valves 134, 135, and 136 can be switched to the open position. Another application may be, for example, that it is very humid inside and the indoors climate is to be made dryer. It may be effective then to bypass a latent heat exchanger so that comparatively dry air is conducted into the building. Figure 10 shows by way of example a situation in which the recuperators 117, 118 are bypassed in that the valves 135, 136 are set to their open position.

Figure 12 diagrammatically shows a ventilation device 151 as an alternative to the ventilation device 101. The ventilation device 151 differs from the ventilation device 101 in that a fan 152 to 157 is provided for each air flow 126a, 127a and for each recuperator. Furthermore, the air flows 126a, 127a have changed directions and the recuperators 116, 117, 118 are located at somewhat greater distances to one another so as to make place for the fans 152, 153, 155, 156, while partition walls 158, 159 are provided therebetween. A number of fans 152, 153, 154, and 155, 156, 157 arranged in series are used for the respective air flows 126a, 126b, which renders it possible to give the individual fans comparatively small dimensions, which may be favourable in particular in view of the limited available space within the housing 112. In further alternative embodiments, the fans 152, 153, 155, 156 may be omitted, or one may choose to omit the fans 154, 157 which are arranged outside the housing 112, on the outer side of the wall 70.

Ventilation devices according to the invention may be used in manners other than those discussed above. It is thus conceivable, for example, to use ventilation devices according to the invention in central ventilation systems as used in buildings, such as residential houses and offices. Although the invention was explained above with reference to air in counterflow, it is equally possible to apply the invention to air flows of the same directions or cross flows. It is furthermore possible to apply the invention with recuperators not having a hexagonal shape, for example a rectangular shape. It is also possible to apply the invention with recuperators of a different construction, i.e. not with stacked plates as in the embodiments discussed above. Thus it is possible, for example, to use the invention in recuperators having a plurality of parallel tubes, such as round tubes, stacked on one another. One of the air flows then passes through the tubes while the other air flow passes in between the tubes. The tube walls are manufactured from a material that is impermeable to moisture in the case of a sensible recuperator and from a material that is permeable to moisture in the case of a latent recuperator. For a hybrid recuperator, part of the tubes may have a wall of moisture-permeable material and the other part of the tubes of the relevant recuperator may have a wall of moisture-impermeable material.

Apart from the moisture permeability properties, the plates of the recuperator may also differ from one another in other properties, as to which may be mentioned first their weight, flame retardation, hydrophilic or hydrophobic properties, hygienic properties, and/or quite generally the material from which the plates are manufactured.

## Claims

1. A recuperator for exchanging energy between a first air flow and a second air flow, comprising stacked plates such that first flow channels and second flow channels for the first air flow and the second air flow, respectively, are arranged between neighbouring plates, wherein plates of a first type and plates of a second type are provided in the stack, wherein the plates of the first type and the plates of the second type differ from one another as regards their weight and/or as regards the material from which they are manufactured, the material of the plates of one of the first and second types being permeable to moisture whereas the material of the plates of the other one of the first and second types being impermeable to moisture, and wherein at least in the area of the first flow channels and the second flow channels, the plates of one of the first and second types are planar and the plates of the other one of the first and second types have an undulating profile alternating, neighbouring first flow channels and second flow channels being formed within sets of two neighbouring planar plates with an undulating profiled plate therebetween.

2. A recuperator according to claim 1, **characterized in that** the plates of the first type and the plates of the second type are provided in alternation in the stack.

3. A recuperator according to claim 1 or 2, **characterized in that** the material permeable to moisture comprises paper, and/or a membrane, or an open cell synthetic resin material.

4. A recuperator according to any one or several of the preceding claims, **characterized in that** the size of the exchanging surface area of the plates of one of the first and second types differs from the size of the exchanging surface area of the plates of the other one of the first and second types.

5. A recuperator according to any one or several of the preceding claims, **characterized in that** respectively the flame retarding properties, the hydrophilic or hydrophobic properties and/or the hygienic properties of the material of the plates of one of the first and second types differ from the respective flame retarding properties, the hydrophilic or hydrophobic properties and/or the hygienic properties of the material of the plates of the other one of the first and second types.

6. A recuperator according to any one or several of the preceding claims, **characterized in that** the plates of one of the first and second types are provided with a coating on at least one side, whereas the plates of the other one of the first and second types are not provided with a coating or are provided with a different coating.

7. A ventilation device for the exchange of energy between a first air flow entering a building from the outer air and a second air flow issuing from said building to the outer air, comprising a housing with an internal communication channel for the two air flows and at least one recuperator of a first type which is arranged in said communication channel, which recuperator of the first type comprises first further flow channels for the first air flow and second further flow channels for the second air flow, wherein neighbouring first further flow channels and second further flow channels are at least partly separated from one another by a wall which is impermeable to moisture, **characterized by** at least one of the latent recuperators is a latent recuperator according to any one or several of the preceding claims , which latent recuperator is also arranged in the communication channel in series with the recuperator of the first type.

8. A ventilation device according to claim 7, **characterized in that** the at least one recuperator of the first type is a sensible recuperator.

9. A ventilation device according to claim 7 or 8, **characterized in that** the at least one recuperator of the first type is a hybrid recuperator wherein only a proportion of the plates of the recuperator of the first type is manufactured from a material that is impermeable to moisture.

10. A ventilation device according to claim 7, 8 or 9, **characterized in that** the ventilation device comprises at least one fan for causing an associated one of the two air flows to pass through the communication channel, preferably the device comprising a fan for each of the two air flows.

11. A ventilation device according to any one or several of the claims 7 to 10, **characterized in that** the ventilation device is provided with at least one valve that is switchable between a first position and a second position, such that in the first position an airflow is passed at least substantially through a recuperator associated with this first position and in the second position the air flow is directed by the valve so as to flow at least substantially past said associated recuperator.

12. A ventilation device for the exchange of energy between a first air flow entering a building from the outer air and a second air flow issuing from said building to the outer air, comprising a housing with an internal communication channel for the two air flows and at least one recuperator of a first type which is arranged in said communication channel, which recuperator of the first type comprises first further flow channels for the first air flow and second further flow channels for the second air flow, wherein neighbouring first further flow channels and second further flow channels are at least partly separated from one another by a wall which is impermeable to moisture, **characterized by** at least one of the latent recuperators is a latent recuperator according to any one or several of the claims 1 to 6 which is also arranged in the communication channel in series with the recuperator of the first type.

13. A window frame provided with a ventilation device according to any one or several of the claims 7 to 12.

14. A building provided with a window frame according to claim 13.

15. A building provided with a ventilation device according to any one or several of the claims 7 to 12, wherein the housing is provided in a passage in an outer wall of the building for exchanging energy between an air flow that flows from the outer air via the device into the building and an air flow that flows out of the building via the device to the outer air.

## Patentansprüche

1. Rekuperator zum Austauschen von Energie zwischen einem ersten Luftstrom und einem zweiten Luftstrom, gestapelte Platten umfassend, so dass erste Strömungskanäle und zweite Strömungskanäle für den ersten Luftstrom bzw. den zweiten Luftstrom zwischen benachbarten Platten angeordnet sind, wobei Platten eines ersten Typs und Platten eines zweiten Typs in dem Stapel vorgesehen sind, wobei sich die Platten des ersten Typs und die Platten des zweiten Typs in Bezug auf ihr Gewicht und/oder in Bezug auf das Material, aus dem sie hergestellt sind, voneinander unterscheiden, wobei das Material der Platten des ersten oder des zweiten Typs feuchtigkeitsdurchlässig sind, während das Material der Platten des anderen aus erstem und zweitem Typ feuchtigkeitsundurchlässig sind, und wobei mindestens im Bereich der ersten Strömungskanäle und der zweiten Strömungskanäle die Platten des ersten oder zweiten Typs planar sind und die Platten des anderen aus erstem und zweitem Typ ein abwechselndes wellenförmiges Profil haben, wobei benachbarte erste Strömungskanäle und zweite Strömungskanäle innerhalb der Sätze von zwei benachbarten planaren Platten mit einer wellenförmigen profilierten Platte dazwischen ausgebildet sind.

2. Rekuperator nach Anspruch 1, **dadurch gekennzeichnet, dass** die Platten des ersten Typs und die Platten des zweiten Typs abwechselnd in dem Stapel vorgesehen sind.

3. Rekuperator nach Anspruch 1 oder 2, **dadurch gekennzeichnet, dass** das feuchtigkeitsdurchlässige Material Papier und/oder eine Membran oder ein offenzelliges Kunstharzmaterial umfasst.

4. Rekuperator nach einem oder mehreren der vorhergehenden Ansprüche, **dadurch gekennzeichnet, dass** sich die Größe der Austauschfläche der Platten des ersten oder zweiten Typs von der Größe der Austauschfläche der Platten des anderen aus erstem und zweitem Typ unterscheidet.

5. Rekuperator nach einem oder mehreren der vorhergehenden Ansprüche, **dadurch gekennzeichnet, dass** sich die flammhemmenden Eigenschaften, die hydrophilen oder hydrophoben Eigenschaften und/oder die hygienischen Eigenschaften des Materials der Platten des ersten oder zweiten Typs jeweils von den jeweiligen flammhemmenden Eigenschaften, den hydrophilen oder hydrophoben Eigenschaften und/oder den hygienischen Eigenschaften des Materials der Platten des anderen aus erstem und zweitem Typ unterscheiden.

6. Rekuperator nach einem oder mehreren der vorhergehenden Ansprüche, **dadurch gekennzeichnet, dass** die Platten des ersten oder zweiten Typs mit einer Beschichtung auf mindestens einer Seite versehen sind, während die Platten des anderen aus erstem und zweitem Typ nicht mit einer Beschichtung versehen sind oder mit einer anderen Beschichtung versehen sind.

7. Ventilationsvorrichtung für den Austausch von Energie zwischen einem ersten Luftstrom, der von der Außenluft in ein Gebäude eintritt, und einem zweiten Luftstrom, der das Gebäude zur Außenluft verlässt, ein Gehäuse mit einem internen Kommunikationskanal für die zwei Luftströme und mindestens einen Rekuperator eines ersten Typs, der in dem genannten Kommunikationskanal angeordnet ist, umfassend, wobei der Rekuperator des ersten Typs erste weitere Strömungskanäle für den ersten Luftstrom und zweite weitere Strömungskanäle für den zweiten Luftstrom umfasst, wobei benachbarte erste weitere Strömungskanäle und zweite weitere Strömungskanäle mindestens teilweise durch eine Wand voneinander getrennt sind, die feuchtigkeitsundurchlässig ist, **dadurch gekennzeichnet, dass** mindestens einer der latenten Rekuperatoren ein latenter Rekuperator nach einem oder mehreren der vorhergehenden Ansprüche ist, wobei der latente Rekuperator auch in dem Kommunikationskanal in Serie mit dem Rekuperator des ersten Typs angeordnet ist.

8. Ventilationsvorrichtung nach Anspruch 7, **dadurch gekennzeichnet, dass** der mindestens eine Rekuperator des ersten Typs ein empfindlicher Rekuperator ist.

9. Ventilationsvorrichtung nach Anspruch 7 oder 8, **dadurch gekennzeichnet, dass** der mindestens eine Rekuperator des ersten Typs ein hybrider Rekuperator ist, wobei nur ein Teil der Platten des Rekuperators des ersten Typs aus einem Material hergestellt ist, das feuchtigkeitsundurchlässig ist.

10. Ventilationsvorrichtung nach Anspruch 7, 8 oder 9, **dadurch gekennzeichnet, dass** die Ventilationsvorrichtung mindestens einen Lüfter umfasst, um zu bewirken, dass ein dazugehöriger Luftstrom der beiden Luftströme durch den Kommunikationskanal passiert, wobei die Vorrichtung vorzugsweise einen Lüfter für jeden der beiden Luftströme umfasst.

11. Ventilationsvorrichtung nach einem oder mehreren der Ansprüche 7 bis 10, **dadurch gekennzeichnet, dass** die Ventilationsvorrichtung mit mindestens einem Ventil versehen ist, das zwischen einer ersten Position und einer zweiten Position umgeschaltet werden kann, so dass in der ersten Position ein Luftstrom mindestens im Wesentlichen durch einen mit dieser ersten Position verbundenen Rekuperator geleitet wird und in der zweiten Position der Luftstrom von dem Ventil so gelenkt wird, dass er mindestens im Wesentlichen an diesem verbundenen Rekuperator vorbeifließt.

12. Ventilationsvorrichtung für den Austausch von Energie zwischen einem ersten Luftstrom, der von der Außenluft in ein Gebäude eintritt, und einem zweiten Luftstrom, der das Gebäude zur Außenluft verlässt, ein Gehäuse mit einem internen Kommunikationskanal für die beiden Luftströme und mindestens einen Rekuperator eines ersten Typs umfassend, der in dem Kommunikationskanal angeordnet ist, wobei der Rekuperator des ersten Typs erste weitere Strömungskanäle für den ersten Luftstrom und zweite weitere Strömungskanäle für den zweiten Luftstrom umfasst, wobei benachbarte erste weitere Strömungskanäle und zweite weitere Strömungskanäle mindestens teilweise durch eine Wand voneinander getrennt sind, die feuchtigkeitsundurchlässig ist, **dadurch gekennzeichnet, dass** mindestens einer der latenten Rekuperatoren ein latenter Rekuperator nach einem oder mehreren der Ansprüche 1 bis 6 ist, der ebenfalls in dem Kommunikationskanal in Serie mit dem Rekuperator des ersten Typs angeordnet ist.

13. Fensterrahmen, der mit einer Ventilationsvorrichtung nach einem oder mehreren der Ansprüche 7 bis 12 versehen ist.

14. Gebäude, das mit einem Fensterrahmen nach Anspruch 13 versehen ist.

15. Gebäude, das mit einer Ventilationsvorrichtung nach einem oder mehreren der Ansprüche 7 bis 12 versehen ist, wobei das Gehäuse in einem Kanal in einer Außenwand des Gebäudes zum Austauschen von Energie zwischen einem Luftstrom, der von der Außenluft über die Vorrichtung in das Gebäude strömt, und einem Luftstrom vorgesehen ist, der über die Vorrichtung zur Außenluft ausströmt.

## Revendications

1. Récupérateur pour échanger de l'énergie entre un premier flux d'air et un deuxième flux d'air, comprenant des plaques empilées de sorte que des premiers canaux d'écoulement et des deuxièmes canaux d'écoulement pour le premier flux d'air et le deuxième flux d'air, respectivement, soient agencés entre des plaques voisines, où des plaques d'un premier type et des plaques d'un deuxième type sont prévues dans l'empilement, où les plaques du premier type et les plaques du deuxième type différent les unes des autres par leur poids et/ou par le matériau à partir duquel elles sont fabriquées, le matériau des plaques de l'un des premier et deuxième types étant perméable à l'humidité tandis que le matériau des plaques de l'autre des premier et deuxième types étant imperméable à l'humidité, et où au moins, dans la zone des premiers canaux d'écoulement et des deuxièmes canaux d'écoulement, les plaques de l'un des premier et deuxième types sont planes et les plaques de l'autre des premier et deuxième types ont un profil ondulé alterné, des premiers canaux d'écoulement et des deuxièmes canaux d'écoulement voisins étant formés à l'intérieur d'ensembles de deux plaques planes voisines avec une plaque profilée ondulée entre celles-ci.

2. Récupérateur selon la revendication 1, **caractérisé en ce que** les plaques du premier type et les plaques du deuxième type sont prévues en alternance dans l'empilement.

3. Récupérateur selon la revendication 1 ou 2, **caractérisé en ce que** le matériau perméable à l'humidité comprend du papier, et/ou une membrane, ou un matériau en résine synthétique à alvéoles ouvertes.

4. Récupérateur selon une ou plusieurs des revendications précédentes, **caractérisé en ce que** la taille de la surface d'échange des plaques de l'un des premier et deuxième types diffère de la taille de la surface d'échange des plaques de l'autre des premier et deuxième types.

5. Récupérateur selon une ou plusieurs des revendications précédentes, **caractérisé en ce que** respectivement les propriétés ignifuges, les propriétés hydrophiles ou hydrophobes et/ou les propriétés hygiéniques du matériau des plaques de l'un des premier et deuxième types diffèrent des propriétés ignifuges respectives, des propriétés hydrophiles ou hydrophobes et/ou des propriétés hygiéniques du matériau des plaques de l'autre des premier et deuxième types.

6. Récupérateur selon une ou plusieurs des revendications précédentes, **caractérisé en ce que** les plaques de l'un des premier et deuxième types sont pourvues d'un revêtement sur au moins un côté, alors que les plaques de l'autre des premier et deuxième types ne sont pas pourvues d'un revêtement ou sont pourvues d'un revêtement différent.

7. Dispositif de ventilation pour l'échange d'énergie entre un premier flux d'air entrant dans un bâtiment à partir de l'air extérieur et un deuxième flux d'air sortant dudit bâtiment vers l'air extérieur, comprenant un boîtier avec un canal de communication interne pour les deux flux d'air et au moins un récupérateur d'un premier type qui est agencé dans ledit canal de communication, lequel récupérateur du premier type comprend des premiers canaux d'écoulement supplémentaires pour le premier flux d'air et des deuxièmes canaux d'écoulement supplémentaires pour le deuxième flux d'air, où des premiers canaux d'écoulement supplémentaires et des deuxièmes canaux d'écoulement supplémentaires voisins sont au moins partiellement séparés les uns des autres par une paroi qui est imperméable à l'humidité, **caractérisé en ce qu'**au moins l'un des récupérateurs latents est un récupérateur latent selon une ou plusieurs des revendications précédentes, lequel récupérateur latent est également agencé dans le canal de communication en série avec le récupérateur du premier type.

8. Dispositif de ventilation selon la revendication 7, **caractérisé en ce que** l'au moins un récupérateur du premier type est un récupérateur sensible.

9. Dispositif de ventilation selon la revendication 7 ou 8, **caractérisé en ce que** l'au moins un récupérateur du premier type est un récupérateur hybride dans lequel seule une partie des plaques du récupérateur du premier type est fabriquée à partir d'un matériau qui est imperméable à l'humidité.

10. Dispositif de ventilation selon la revendication 7, 8 ou 9, **caractérisé en ce que** le dispositif de ventilation comprend au moins un ventilateur pour amener un flux associé des deux flux d'air à traverser le canal de communication, de préférence le dispositif comprenant un ventilateur pour chacun des deux flux d'air.

11. Dispositif de ventilation selon une ou plusieurs des revendications 7 à 10, **caractérisé en ce que** le dispositif de ventilation est pourvu d'au moins une soupape qui est commutable entre une première position et une deuxième position, de sorte que, dans la première position, un flux d'air traverse au moins sensiblement un récupérateur associé à cette première position et, dans la deuxième position, le flux d'air soit dirigé par la soupape de manière à s'écouler au moins sensiblement au-delà dudit récupérateur associé.

12. Dispositif de ventilation pour l'échange d'énergie entre un premier flux d'air entrant dans un bâtiment à partir de l'air extérieur et un deuxième flux d'air sortant dudit bâtiment vers l'air extérieur, comprenant un boîtier avec un canal de communication interne pour les deux flux d'air et au moins un récupérateur d'un premier type qui est agencé dans ledit canal de communication, lequel récupérateur du premier type comprend des premiers canaux d'écoulement supplémentaires pour le premier flux d'air et des deuxièmes canaux d'écoulement supplémentaires pour le deuxième flux d'air, où des premiers canaux d'écoulement supplémentaires et des deuxièmes canaux d'écoulement supplémentaires voisins sont au moins partiellement séparés les uns des autres par une paroi qui est imperméable à l'humidité, **caractérisé en ce qu'**au moins l'un des récupérateurs latents est un récupérateur latent selon une ou plusieurs des revendications 1 à 6 qui est également agencé dans le canal de communication en série avec le récupérateur du premier type.

13. Cadre de fenêtre pourvu d'un dispositif de ventilation selon une ou plusieurs des revendications 7 à 12.

14. Bâtiment pourvu d'un cadre de fenêtre selon la revendication 13.

15. Bâtiment pourvu d'un dispositif de ventilation selon une ou plusieurs des revendications 7 à 12, dans lequel le boîtier est prévu dans un passage dans un mur extérieur du bâtiment pour échanger de l'énergie entre un flux d'air qui s'écoule à partir de l'air extérieur par l'intermédiaire du dispositif dans le bâtiment et un flux d'air qui s'écoule hors du bâtiment par l'intermédiaire du dispositif vers l'air extérieur.
